# EUROPEAN PATENT APPLICATION

(11) **EP 4 835 973 A1**
(43) Date of publication of application: **04.11.2026**
(21) Application number: 24912758.0
(22) Date of filing: 23.12.2024
(51) Int. Cl.: H01M 4/13, H01M 4/36, H01M 4/38, H01M 4/58, H01M 4/62

(54) **POSITIVE ELECTRODE MIXTURE**

(30) Priority: 27.12.2023 JP 2023220599
(71) Applicant: Idemitsu Kosan Co.,Ltd., Tokyo 100-8321 (JP)
(72) Inventor: HANIU, Yamato, Tokyo 100-8321 (JP); HAMANO, Ai, Tokyo 100-8321 (JP)
(74) Representative: Vossius & Partner Patentanwälte Rechtsanwälte mbB
(86) International application number: PCT/JP2024/045542
(87) International publication number: WO 2025/142871

(57) **Abstract**

A positive electrode mixture according to the present invention contains a sulfur-based active material, a carbon material that has pores, an ion conductor that contains elemental phosphorus and/or a modified product of the ion conductor, and a solid electrolyte, wherein in a P2p spectrum in surface element analysis by X-ray photoelectron spectroscopy, the following expression (1) is satisfied. (1): I_{A}/I_{B} > 0.20 (In the formula, I_{A} is the signal strength at a position A where the binding energy is around 135.4 eV, and I_{B} is the signal strength at a position B where the binding energy is around 134.25 eV).

## Description

### Technical Field

The present invention relates to a positive electrode mixture.

### Background Art

A high battery capacity is required in a lithium ion battery. To improve the battery capacity, a method including using sulfur for a positive electrode has been investigated because sulfur has a large theoretical capacity. However, when sulfur is used for the positive electrode, lithium ion conductivity and electron conductivity in the positive electrode need to be secured because sulfur has low lithium ion conductivity and low electron conductivity.

To solve the above-mentioned problem, a positive electrode mixture in which sulfur, a carbon material, phosphorus pentasulfide, a solid electrolyte, and the like are formed into a composite by mechanical milling with a planetary ball mill has been investigated (see, for example, Patent Literatures 1 and 2). In addition, a positive electrode mixture containing sulfur, a carbon material having pores, a solid electrolyte, and the like in which the solid electrolyte is arranged in pores of the carbon material from a solution state has been investigated (see, for example, Patent Literatures 3 and 4).

### Citation List

### Patent Literature

[PTL 1] JP 7156157 B2
[PTL 2] JP 6061139 B2
[PTL 3] JP 7283657 B2
[PTL 4] WO 2023/187466 A1

### Summary of Invention

It is required to further improve the charge-discharge characteristics of a lithium ion battery as compared to those of the related art. In such normal mixing by mechanical milling as disclosed in each of Patent Literatures 1 and 2, the formation of an interface between sulfur and a carbon material, and a solid electrolyte, phosphorus pentasulfide, or the like in a composite to be obtained is insufficient, and hence there has been a limitation on the formation of an ion conduction path to sulfur and the carbon material. In such method of precipitating a solid electrolyte from a solution as disclosed in each of Patent Literatures 3 and 4, the formation of an interface between sulfur and a carbon material, and the solid electrolyte in a composite to be obtained is insufficient, and hence there has been a limitation on the formation of an ion conduction path to sulfur and the carbon material.

An object of the present invention is to provide a positive electrode mixture capable of improving the charge-discharge characteristics of a lithium ion battery.

According to the present invention, there are provided the following positive electrode mixture and the like.
1. A positive electrode mixture including a sulfur-based active material; a carbon material having pores; at least one of an ion conductor containing a phosphorus element and a modified product of the ion conductor; and a solid electrolyte,
   wherein in a P2p spectrum in surface elemental analysis thereof by X-ray photoelectron spectroscopy, the following formula (1) is satisfied: ${I}_{A} / {I}_{B} > 0.20$ (1) wherein I_{A} represents a signal intensity at a position A where a binding energy is around 135.4 eV, and I_{B} represents a signal intensity at a position B where the binding energy is around 134.25 eV.
2. The positive electrode mixture according to Item 1, wherein in elemental mapping image analysis of a scanning electron microscope image thereof by energy dispersive X-ray spectroscopy, an overlap rate between a phosphorus element and a carbon element is 28.0% or more.
3. The positive electrode mixture according to Item 1, wherein in elemental mapping image analysis of a scanning electron microscope image thereof by energy dispersive X-ray spectroscopy, an overlap rate among a sulfur element, a phosphorus element, and a carbon element is 4.0% or more.
4. The positive electrode mixture according to any one of Items 1 to 3, wherein the ion conductor has a melting point of from 130°C to 450°C.
5. The positive electrode mixture according to any one of Items 1 to 4, wherein the ion conductor includes a lithium ion conductive material containing a phosphorus element, and one or more kinds of elements selected from lithium, boron, sulfur, and oxygen, or a precursor thereof.
6. The positive electrode mixture according to any one of Items 1 to 5, wherein the ion conductor includes phosphorus sulfide.
7. The positive electrode mixture according to any one of Items 1 to 6, wherein the ion conductor includes phosphorus pentasulfide.
8. The positive electrode mixture according to any one of Items 1 to 7, wherein the sulfur-based active material includes elemental sulfur.
9. The positive electrode mixture according to any one of Items 1 to 8, wherein a mass ratio of a total of the sulfur-based active material, and the ion conductor containing a phosphorus element and the modified product of the ion conductor is smaller than 5.00 to the carbon material.
10. A method of producing a positive electrode mixture including: mixing at least one of a composite or a mixture of a sulfur-based active material and a carbon material having pores with an ion conductor in a molten state to prepare a positive electrode mixture precursor; and
   mixing and pulverizing the positive electrode mixture precursor and a solid electrolyte to produce the positive electrode mixture,
   wherein the mixing and pulverizing includes: a first mixing step of mixing and pulverizing the positive electrode mixture precursor to provide a first mixture; and
      a second mixing step of adding the solid electrolyte to the first mixture, followed by mixing treatment.
11. The method of producing it according to Item 10, wherein the composite of the sulfur-based active material and the carbon material having pores is mixed with the ion conductor in a molten state.
12. The method of producing it according to Item 10 or 11, wherein the solid electrolyte has crystallinity, and the mixing and pulverizing in the second mixing step is performed under a condition where the crystallinity of the solid electrolyte is free from disappearing.
13. The method of producing it according to any one of Items 10 to 12, wherein the ion conductor has a melting point of from 130°C to 450°C.
14. The method of producing it according to any one of Items 10 to 13, wherein the ion conductor includes a lithium ion conductive material containing a phosphorus element, and one or more kinds of elements selected from lithium, boron, sulfur, and oxygen, or a precursor thereof.
15. The method of producing it according to any one of Items 10 to 14, wherein the ion conductor is phosphorus pentasulfide.
16. The method of producing it according to any one of Items 10 to 15, wherein the sulfur-based active material includes elemental sulfur.
17. The method of producing it according to any one of Items 10 to 16, wherein a mass ratio among the sulfur-based active material, the carbon material, and the ion conductor satisfies the following relationship:$\left(sulfur-based active material+carbon material\right) : ion conductor = 50 : 1 to 80 .$
18. The method of producing it according to any one of Items 10 to 17, wherein a mass ratio of a total of the sulfur-based active material and the ion conductor is smaller than 5.00 to the carbon material.
19. A positive electrode including the positive electrode mixture according to any one of Items 1 to 9.
20. A lithium ion battery including the positive electrode mixture according to any one of Items 1 to 9, or the positive electrode according to Item 19.

The present invention can provide the positive electrode mixture capable of improving the charge-discharge characteristics of a lithium ion battery. In addition, the usage amount of a solid electrolyte, which is often produced by a complicated production process, can be reduced, and hence a reduction in cost can be expected.

### Brief Description of Drawings

FIG. 1 is a P2p spectrum of Example 1.
FIG. 2 is a P2p spectrum of Example 2.
FIG. 3 is a P2p spectrum of Comparative Example 1.
FIG. 4 is a P2p spectrum of Reference Example 1.
FIG. 5 is a P2p spectrum of Reference Example 2.
FIG. 6 is a P2p spectrum of Reference Example 3.
FIG. 7(a) is an EDS mapping of the carbon element (C) of Example 1, and FIG. 7(b) is an image obtained by subjecting FIG. 7(a) to image processing.
FIG. 8(a) is an EDS mapping of the phosphorus element (P) of Example 1, and FIG. 8(b) is an image obtained by subjecting FIG. 8(a) to image processing.
FIG. 9(a) is an EDS mapping of the sulfur element (S) of Example 1, and FIG. 9(b) is an image obtained by subjecting FIG. 9(a) to image processing.
FIG. 10(a) is an EDS mapping of the carbon element (C) of Comparative Example 1, and FIG. 10(b) is an image obtained by subjecting FIG. 10(a) to image processing.
FIG. 11(a) is an EDS mapping of the phosphorus element (P) of Comparative Example 1, and FIG. 11(b) is an image obtained by subjecting FIG. 11(a) to image processing.
FIG. 12(a) is an EDS mapping of the sulfur element (S) of Comparative Example 1, and FIG. 12(b) is an image obtained by subjecting FIG. 12(a) to image processing.

### Description of Embodiments

### 1. First Embodiment of Positive Electrode Mixture

A positive electrode mixture according to one embodiment of the present invention includes a sulfur-based active material; a carbon material having pores; at least one of an ion conductor containing a phosphorus element and a modified product of the ion conductor; and a solid electrolyte. In addition, in a P2p spectrum in its surface elemental analysis by X-ray photoelectron spectroscopy, the following formula (1) is satisfied: ${I}_{A} / {I}_{B} > 0.20$ (1) wherein I_{A} represents a signal intensity at a position A where a binding energy is around 135.4 eV, and I_{B} represents a signal intensity at a position B where the binding energy is around 134.25 eV.

The term "around" means that the position of the binding energy may slightly vary depending on a measuring apparatus and the like. For example, the position A means a peak appearing within the range of 135.0 eV or more and 136.5 eV or less, and the position B means a peak appearing within the range of 133.5 eV or more and less than 135.0 eV. In addition, when a clear peak does not appear at each position, a binding energy of 135.4 eV is set as the position A, and a binding energy of 134.25 eV is set as the position B.

The position B of the P2p spectrum is the position of the peak top of P₂S₅, and the signal intensity at the position B may include the signal intensity of P₂S₅. The signal intensity at the position A is derived from the modified product of the ion conductor. The fact that the signal intensity ratio I_{A}/I_{B} is large indicates that the ratio of the modified product is high relative to P₂S₅. In the positive electrode mixture of this embodiment, the intensity ratio I_{A}/I_{B} is higher than that in the related art in which an ion conductor is mechanically mixed in a solid state with a sulfur-based active material and a carbon material. Specifically, the formula (1) is satisfied. The foregoing may indicate that the sulfur-based active material, the carbon material, and the ion conductor and the modified product of the ion conductor form an interface in a form different from a conventional one. As a result, ion conduction paths in the positive electrode mixture are efficiently formed, and hence a positive electrode mixture capable of improving the charge-discharge characteristics of a lithium ion battery is obtained.

Details of P2p spectrum analysis are as described in Examples.

In the positive electrode mixture according to one embodiment of the present invention, in the elemental mapping image analysis of a scanning electron microscope image of the positive electrode mixture by energy dispersive X-ray spectroscopy (SEM-EDS analysis), an overlap rate between a phosphorus element and a carbon element is 28.0% or more. In addition, in the positive electrode mixture according to one embodiment, in the elemental mapping image analysis of a scanning electron microscope image of the positive electrode mixture by the energy dispersive X-ray spectroscopy, an overlap rate among a sulfur element, a phosphorus element, and a carbon element is 4.0% or more.

In the SEM-EDS analysis, the states of elements existing in a cross section of the positive electrode mixture, that is, inside, and on the surface of, the carbon material having pores can be grasped. A high overlap rate between each element and the carbon element means that the ion conductor and the sulfur-based active material permeate and cover the insides and surfaces of the pores of the carbon material. In the positive electrode mixture of this embodiment, the overlap rate between the phosphorus element and the carbon element is 28.0% or more, which is higher than that of a related-art positive electrode mixture. Similarly, the overlap rate among the sulfur element, the phosphorus element, and the carbon element becomes 4.0% or more. The foregoing indicates that the ion conductor permeates and covers the inside and surface of the carbon material. As a result, a strong interface and an ion conduction path in the positive electrode mixture are efficiently formed, and hence a positive electrode mixture capable of improving the charge-discharge characteristics of a lithium ion battery is obtained.

Details of the SEM-EDS analysis are as described in Examples.

In one embodiment, the mass ratio of the total of the sulfur-based active material (S), and the ion conductor containing a phosphorus element and the modified product of the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less.

The above-mentioned mass ratio may be adjusted by the blending amount of each constituent material.

### 2. Method of producing Positive Electrode Mixture

The positive electrode mixture of this embodiment may be produced, for example, by a method of the present invention including the following steps.

Step (A): At least one of a composite or a mixture of a sulfur-based active material and a carbon material having pores is mixed with an ion conductor in a molten state to prepare a positive electrode mixture precursor.

Step (B): Particles of the positive electrode mixture precursor of the step (A) are mixed and pulverized to provide a first mixture (first mixing step). Subsequently, a solid electrolyte is added to the first mixture, and the whole is subjected to mixing treatment (second mixing step).

In one embodiment, the positive electrode mixture is obtained by the production method of the present invention. The positive electrode mixture precursor and the method of producing the positive electrode mixture are described below.

### [Step (A)]

In the step (A), at least one of the composite or mixture of the sulfur-based active material and the carbon material having pores is mixed with the ion conductor in a molten state to prepare the positive electrode mixture precursor.

Although the sulfur-based active material is not particularly limited, examples thereof include sulfur, lithium sulfide (Li₂S), lithium polysulfide (Li₂Sₙ: "n" satisfies 1<n≤8), titanium sulfide (TiS₂), molybdenum sulfide (MoS₂), iron sulfide (FeS or FeS₂), copper sulfide (CuS), nickel sulfide (Ni₃S₂), and sulfur-containing polymer compounds. Of those, sulfur is preferred.

Although sulfur is not particularly limited, sulfur having as high a purity as possible is preferred. Specifically, the purity is preferably 95% by mass or more, more preferably 96% by mass or more, particularly preferably 97% by mass or more.

Examples of the crystal system of sulfur include α-sulfur (orthorhombic), β-sulfur (monoclinic), γ-sulfur (monoclinic), and amorphous sulfur. These may be used alone, or two or more kinds thereof may be used in combination.

A lithium ion conductive material containing a phosphorus element or a precursor thereof may be used as the ion conductor.

The lithium ion conductive material is, for example, a lithium ion conductive material containing one or more kinds of elements selected from lithium, boron, oxygen, sulfur, phosphorus, a halogen, and antimony, or a precursor thereof. The lithium ion conductive material is preferably a lithium ion conductive material containing a phosphorus element, and one or more kinds of elements selected from lithium, boron, sulfur, and oxygen, or a precursor thereof. A lithium ion conductive material containing no phosphorus element may be used in combination with the lithium ion conductive material containing a phosphorus element.

The term "lithium ion conductive material containing one or more kinds of elements selected from lithium, boron, oxygen, sulfur, phosphorus, a halogen, and antimony" as used herein means a material that maintains a solid state at 25°C under a nitrogen atmosphere and has an ionic conductivity resulting from a lithium ion. In addition, the term "precursor of a lithium ion conductive material containing one or more kinds of elements selected from lithium, boron, oxygen, phosphorus, a halogen, and antimony" means a material, which forms a compound containing lithium by reacting with lithium metal or a lithium ion when used as an active material of a lithium ion battery, and which becomes the above-mentioned lithium ion conductive material.

The term "halogen" as used herein means elements, such as fluorine, chlorine, bromine, and iodine.

The melting point of the ion conductor is preferably from 130°C to 450°C, more preferably from 220°C to 450°C because the ion conductor is turned into a melt by heating. In addition, the melting point of the ion conductor is preferably as low as possible, for example, 440°C or less, 430°C or less, 420°C or less, 410°C or less, or 400°C or less. Elemental sulfur, which is listed as an example of the sulfur-based active material, has a boiling point of about 450°C. It is conceivable that when elemental sulfur is mixed with a melt of a substance having a melting point equal to or more than the boiling point, elemental sulfur volatilizes to make it impossible to obtain a desired positive electrode mixture precursor. In addition, when a temperature in the step is lowered, energy at the time of the production of the positive electrode mixture precursor can be reduced, and the reduction leads to a reduction in cost.

Examples of the lithium ion conductive material include lithium borohydride, LiBF₄, an organic lithium salt, and a polymer electrolyte such as polyethylene oxide. In addition, examples of the precursor of the lithium ion conductive material include phosphorus sulfide such as phosphorus pentasulfide; red phosphorus; boron sulfide; phosphorus pentoxide; and tin. These compounds may be used alone, or two or more kinds thereof may be used in combination.

Examples of the organic lithium salt include lithium salts of bis(perfluoroalkylsulfonyl)imides, such as lithium bis(trifluoromethanesulfonyl)imide, lithium bis(fluorosulfonyl)imide, lithium (fluorosulfonyl)(trifluoromethanesulfonyl)imide, lithium bis(pentafluoroethanesulfonyl)imide, and lithium bis(nonafluorobutanesulfonyl)imide; lithium salts of perfluoroalkylsulfonimides such as a 4,4,5,5-tetrafluoro-1,3,2-dithiazolidine-1,1,3,3-tetraoxide lithium salt; lithium salts of fluorosulfonylimides; lithium trifluoromethanesulfonate; lithium salts of carboxylic acids, such as lithium acetate, lithium propionate, and lithium butyrate; lithium salts of organic sulfonic acids, such as lithium dodecylbenzenesulfonate and lithium p-styrenesulfonate; and lithium salts of organic phosphoric acids.

Each of those organic lithium salts is preferably used together with an ion conductive polymer or an ionic liquid. In this case, the impartment of higher lithium conductivity can be expected.

The ion conductor is preferably one or more compounds selected from the group consisting of phosphorus sulfide; red phosphorus; boron sulfide; phosphorus pentoxide; and a polymer electrolyte such as polyethylene oxide, the compounds being each substantially free of a lithium element. The ion conductor that is substantially free of a lithium element may have a high affinity for the sulfur-based active material or the carbon material.

The ion conductor is more preferably one or more compounds selected from the group consisting of phosphorus sulfide; red phosphorus; and phosphorus pentoxide.

Examples of phosphorus sulfide include phosphorus trisulfide (P₄S₃), phosphorus pentasulfide (P₂S₅), phosphorus heptasulfide (P₄S₇), and tetraphosphorus pentasulfide (P₄S₅). In addition, phosphorus sulfide may have a dimer or polysulfide structure, or may be a mixture thereof. The ion conductor is particularly preferably phosphorus pentasulfide, which is expected to react with lithium to form a sulfide solid electrolyte showing high ion conductivity.

The content of phosphorus sulfide or phosphorus pentasulfide with respect to the entirety of the ion conductor is 50% by mass or more, 80% by mass or more, 95% by mass or more, or 99% by mass or more, and is substantially 100% by mass. When the content is substantially 100% by mass, an unavoidable impurity may be included.

Examples of the carbon material having pores include carbon black, such as ketjen black, acetylene black, Denka black, thermal black, channel black, or CNovel (trademark); graphite; and activated carbon. These may be used alone, or two or more kinds thereof may be used in combination.

In one embodiment, the BET specific surface area of the carbon material is 50 m²/g or more and 6,000 m²/g or less. Thus, a wide contact interface between the carbon material and the sulfur-based active material can be formed, and hence the utilization ratio of the sulfur-based active material can be increased.

The BET specific surface area is 70 m²/g or more, 100 m²/g or more, 1,000 m²/g or more, 1,500 m²/g or more, 2,000 m²/g or more, 2,500 m²/g or more, or 3,000 m²/g or more. In addition, the BET specific surface area is preferably 5,500 m²/g or less, more preferably 5,000 m²/g or less.

In addition, the pore volume of the carbon material is 0.5 cm³/g or more and 6 cm³/g or less. Thus, pores of the carbon material can be impregnated with the sulfur-based active material, and hence the capacity of a battery can be further improved.

The pore volume is preferably 0.7 cm³/g or more, more preferably 1.0 cm³/g or more. In addition, the pore volume is preferably 5.5 cm³/g or less, more preferably 5.0 cm³/g or less.

In the present invention, the BET specific surface area and the pore volume may be determined by using a nitrogen adsorption isotherm obtained by causing the carbon material to adsorb a nitrogen gas under liquid nitrogen temperature. Specifically, the BET specific surface area may be calculated by the Brenauer-Emmet-Telle (BET) multi-point method through use of the nitrogen adsorption isotherm. In addition, the pore volume may be determined by the Barret-Joyner-Halenda (BJH) method through use of the nitrogen adsorption isotherm.

Measurement may be performed by using, for example, a specific surface area/pore distribution-measuring apparatus (Autosorb-3) manufactured by Quantacrome Instruments as a measuring apparatus.

In the production method of this embodiment, at least one of the composite or mixture of the sulfur-based active material and the carbon material having pores described above is mixed with the ion conductor in a molten state. In one embodiment, the composite of the sulfur-based active material and the carbon material having pores is prepared in advance, and then the composite is mixed with the ion conductor in a molten state. Thus, the surface of the composite, that is, each of the top of the sulfur-based active material and the top of the carbon material is covered with the ion conductor, and hence an ion conduction path among the three materials is efficiently formed. Meanwhile, it is conceivable that even when the mixture of the sulfur-based active material and the carbon material having pores is mixed with the ion conductor in a molten state, the sulfur-based active material having a melting point lower than that of the ion conductor is melted first to produce the composite of the sulfur-based active material and the carbon material having pores, and then the ion conductor is melted to produce a similar structure.

In one embodiment, a mass ratio between the sulfur-based active material (S) and the carbon material (C) is from 1:9 to 9:1, preferably from 5:5 to 9:1.

A method of forming the composite of the sulfur-based active material and the carbon material having pores is not particularly limited. For example, the sulfur-based active material and the carbon material may be mixed and pulverized to be formed into a composite with a mixing pulverizer such as a planetary ball mill. Alternatively, the sulfur-based active material and the carbon material may be formed into a composite by being heated to a temperature equal to or more than the melting point of the sulfur-based active material in a sealed state.

The mixing of at least one of the composite or mixture of the sulfur-based active material and the carbon material having pores with the ion conductor in a molten state may be performed by heating at a temperature equal to or more than the melting point of the ion conductor. A heating temperature is adjusted in accordance with the ion conductor to be used. A substance having sublimability at normal pressure may be pressurized and mixed in a molten state. A heating time is preferably from 10 minutes to 24 hours.

The cooling of the mixture after the heating provides a positive electrode mixture precursor. A pulverization step may be performed after the cooling as required.

In one embodiment, a mass ratio among the sulfur-based active material, carbon material, and ion conductor of the positive electrode mixture precursor satisfies the following relationship: $\left(sulfur-based active material+carbon material\right) : ion conductor = 50 : 1 to 80 .$

It is preferably (sulfur-based active material+carbon material):ion conductor = 50:10 to 60.

In one embodiment, the mass ratio of the total of the sulfur-based active material (S) and the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less. In addition, the above-mentioned mass ratio is 2.00 or more, 2.60 or more, or 3.20 or more.

The above-mentioned mass ratio may be adjusted by the blending amount of each constituent material.

### [Step (B)]

In the step (B), the particles of the positive electrode mixture precursor of the step (A) are mixed and pulverized to provide the first mixture (first mixing step). Subsequently, the solid electrolyte is added to the first mixture, and the whole is subjected to the mixing treatment (second mixing step).

In this embodiment, in the first mixing step, the particles of the positive electrode mixture precursor are made fine by being mixed and pulverized under a condition of a relatively strong impact force. Thus, the number of contact points between the particles of the positive electrode mixture can be increased, and hence the charge-discharge characteristics of a lithium ion battery can be improved. In the first mixing step, the solid electrolyte may be blended or may not be blended. In the first mixing step, for example, a device having a relatively large impact force such as a planetary ball mill only needs to be used. In addition, the mixing and pulverizing only needs to be performed in a state of a higher load than usual by adjusting conditions such as the number of revolutions.

The mixing and pulverizing may be performed under a condition of a relatively weak impact force as required because the solid electrolyte is blended thereto and mixed in the second mixing step. For example, a device having a relatively small impact force such as a tumbling mill only needs to be used. In addition, the mixing and pulverizing only needs to be performed in a state of a lower load than usual by adjusting conditions such as the number of revolutions.

In one embodiment, the solid electrolyte is a crystalline solid electrolyte, and is mixed and pulverized under a condition where the crystallinity of the solid electrolyte does not disappear, to thereby produce the positive electrode mixture in the second mixing step. Whether or not the crystallinity of the solid electrolyte is maintained may be recognized by, for example, the presence of a crystal peak and a change in full width at half maximum by X-ray diffraction measurement.

Although the solid electrolyte is not particularly limited, the solid electrolyte is, for example, a sulfide solid electrolyte used in a lithium ion battery to be described later.

A mixing apparatus in each of the first mixing step and the second mixing step is, for example, a planetary ball mill, a tumbling mill, a bead mill, Filmix, a Nauta mixer, a Tornado mixer, a twin-screw extruder, a multi-screw roller, or a solid-phase shear kneader.

### 3. Lithium Ion Battery

A lithium ion battery according to one embodiment of the present invention includes the above-mentioned positive electrode mixture of the present invention. For example, an all-solid-state lithium ion battery may be produced by using a solid electrolyte instead of a liquid electrolyte. An all-solid-state lithium ion battery having satisfactory charge-discharge characteristics may be produced by using the positive electrode mixture of the present invention. The all-solid-state lithium ion battery is described below.

The all-solid-state lithium ion battery mainly includes a positive electrode layer, a negative electrode layer, and an electrolyte layer, and the positive electrode mixture of the present invention is suitable as a constituent material for the positive electrode layer. The negative electrode layer and the electrolyte layer may each be produced by a known method. In addition, a current collector is preferably used in addition to the positive electrode layer, the negative electrode layer, and the electrolyte layer, and a known current collector is used.

The solid electrolyte is not particularly limited, but is, for example, a sulfide solid electrolyte.

The sulfide solid electrolyte is a solid electrolyte that contains at least a sulfur atom and expresses an ion conductivity resulting from a lithium ion therein. The electrolyte is a solid electrolyte that contains preferably a lithium atom and a phosphorus atom, more preferably a lithium atom, a phosphorus atom, and a halogen atom in addition to the sulfur atom, and has an ion conductivity resulting from the lithium atom.

The sulfide solid electrolyte may be an amorphous sulfide solid electrolyte, or may be a crystalline sulfide solid electrolyte.

### (Amorphous Sulfide Solid Electrolyte)

Any electrolyte may be adopted as the amorphous sulfide solid electrolyte without any particular limitation as long as the electrolyte contains at least a sulfur atom and expresses an ion conductivity resulting from a lithium ion therein. Typical preferred examples thereof include a solid electrolyte containing a sulfur atom, a lithium atom, and a phosphorus atom, the electrolyte including lithium sulfide and phosphorus sulfide, such as Li₂S-P₂S₅; a solid electrolyte including lithium sulfide, phosphorus sulfide, and a lithium halide, such as Li₂S-P₂S₅-Lil, Li₂S-P₂S₅-LiCl, Li₂S-P₂S₅-LiBr, or Li₂S-P₂S₅-LiI-LiBr; and a solid electrolyte further containing any other element, such as an oxygen element or a silicon element, in addition to a sulfur element, such as Li₂S-P₂S₅-Li₂I-LiI or Li₂S-SiS₂-P₂S₅-LiI. From the viewpoint of obtaining a higher ion conductivity, a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr, is preferred.

The kind of an element for forming the amorphous sulfide solid electrolyte may be identified with, for example, an ICP optical emission spectrometer.

When the amorphous sulfide solid electrolyte includes at least Li₂S-P₂S₅, a molar ratio between Li₂S and P₂S₅ is preferably 65 to 85:15 to 35, more preferably 70 to 80:20 to 30, still more preferably 72 to 78:22 to 28 from the viewpoint of obtaining high chemical stability and a higher ion conductivity.

When the amorphous sulfide solid electrolyte is, for example, Li₂S-P₂S₅-LiI-LiBr, the total of the contents of lithium sulfide and phosphorus pentasulfide is preferably from 60 mol% to 95 mol%, more preferably from 65 mol% to 90 mol%, still more preferably from 70 mol% to 85 mol%. In addition, the ratio of lithium bromide to the total of lithium bromide and lithium iodide is preferably from 1 mol% to 99 mol%, more preferably from 20 mol% to 90 mol%, still more preferably from 40 mol% to 80 mol%, particularly preferably from 50 mol% to 70 mol%.

When the amorphous sulfide solid electrolyte contains a lithium atom, a sulfur atom, a phosphorus atom, and a halogen atom, a blending ratio (molar ratio) among these atoms is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, still more preferably 1.2 to 1.6:1.3 to 1.7:0.25 to 0.5:0.08 to 0.4.

In addition, when bromine and iodine are used in combination as halogen atoms, a blending ratio (molar ratio) among the lithium atom, the sulfur atom, the phosphorus atom, a bromine atom, and an iodine atom is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, more preferably 1.2 to 1.6:1.3 to 1.7:0.25 to 0.5:0.03 to 0.2:0.03 to 0.2, still more preferably 1.35 to 1.45:1.4 to 1.7:0.3 to 0.45:0.04 to 0.18:0.04 to 0.18. When the blending ratio (molar ratio) among the lithium atom, the sulfur atom, the phosphorus atom, and the halogen atoms is set within the above-mentioned ranges, it becomes easier to obtain a solid electrolyte having a higher ion conductivity, the electrolyte having a thio-LISICON Region II-type crystal structure to be described later.

In addition, although the shape of the amorphous sulfide solid electrolyte is not particularly limited, the shape may be, for example, a particulate shape. The average particle diameter (D₅₀) of a particulate amorphous sulfide solid electrolyte may fall within the range of, for example, from 0.01 µm to 500 µm, or from 0.1 µm to 200 µm.

The term "average particle diameter (D₅₀)" as used herein refers to a particle diameter defined as follows: when a particle diameter distribution cumulative curve is drawn, the numbers of particles are sequentially added up from the number of particles each having the smallest particle diameter; and the particle diameter at which the resultant value reaches 50% of the total number of the particles is defined as the average particle diameter. The term "volume distribution average particle diameter" refers to an average particle diameter that may be measured with, for example, a laser diffraction/scattering particle diameter distribution-measuring apparatus.

### (Crystalline Sulfide Solid Electrolyte)

The crystalline sulfide solid electrolyte may be, for example, a so-called glass ceramic obtained by heating the above-mentioned amorphous sulfide solid electrolyte to a temperature equal to or more than its crystallization temperature, and sulfide solid electrolytes having the following crystal structures may each be adopted.

A crystal structure that a crystalline sulfide solid electrolyte containing a lithium atom, a sulfur atom, and a phosphorus atom may have is, for example, a Li₃PS₄ crystal structure, a Li₄P₂S₆ crystal structure, a Li₇PS₆ crystal structure, a Li₇P₃S₁₁ crystal structure, or a crystal structure having peaks near Bragg angles 2θ of 20.2° and 23.6° (e.g., JP 2013-16423 A).

In addition, a crystal structure that a crystalline sulfide solid electrolyte containing a lithium atom, a sulfur atom, a phosphorus atom, and a halogen atom may have is, for example, a Li₄₋ₓGe₁₋ₓPₓS₄-based thio-LISICON Region II-type crystal structure (see Kanno et al., Journal of The Electrochemical Society, 148(7)A742-746 (2001)) or a crystal structure similar to the Li₄₋ₓGe₁₋ₓPₓS₄-based thio-LISICON Region II type (see Solid State Ionics, 177 (2006), 2721-2725)). The term "thio-LISICON Region II-type crystal structure" as used herein refers to any of a Li₄₋ₓGe₁₋ₓPₓS₄-based thio-LISICON Region II-type crystal structure and the crystal structure similar to the Li₄₋ₓGe₁₋ₓPₓS₄-based thio-LISICON Region II type.

In X-ray diffraction measurement with a CuKα ray, the diffraction peaks of the Li₃PS₄ crystal structure appear around, for example, Bragg angles 2θ of 17.5°, 18.3°, 26.1°, 27.3°, and 30.0°. The diffraction peaks of the Li₄P₂S₆ crystal structure appear around, for example, Bragg angles 2θ of 16.9°, 27.1°, and 32.5°. The diffraction peaks of the Li₇PS₆ crystal structure appear around, for example, Bragg angles 2θ of 15.3°, 25.2°, 29.6°, and 31.0°. The diffraction peaks of the Li₇P₃S₁₁ crystal structure appear around, for example, Bragg angles 2θ of 17.8°, 18.5°, 19.7°, 21.8°, 23.7°, 25.9°, 29.6°, and 30.0°. The diffraction peaks of the Li₄₋ₓGe₁₋ₓPₓS₄-based thio-LISICON Region II-type crystal structure appear around, for example, Bragg angles 2θ of 20.1°, 23.9°, and 29.5°. The diffraction peaks of the crystal structure similar to the Li₄₋ₓGe₁₋ₓPₓS₄-based thio-LISICON Region II type appear around, for example, Bragg angles 2θ of 20.2° and 23.6°. Those peak positions may each vary within the range of ±0.5°.

In addition, the crystal structure of the crystalline sulfide solid electrolyte is, for example, an argyrodite-type crystal structure. Examples of the argyrodite-type crystal structure include a Li₇PS₆ crystal structure; crystal structures represented by the composition formulae Li₇₋ₓP_{1-y}Si_{y}S₆ and Li₇₊ₓP_{1-y}Si_{y}S₆ ("x" represents from -0.6 to 0.6 and "y" represents from 0.1 to 0.6), the structures each having a Li₇PS₆ structural skeleton; a crystal structure represented by Li_{7-x-2y}PS_{6-x-y}Clₓ (0.8≤x≤1.7 and 0<y≤-0.25x+0.5); and a crystal structure represented by Li₇₋ₓPS₆₋ₓHaₓ (Ha represents Cl or Br, and "x" preferably represents from 0.2 to 1.8).

The crystal structure of the crystalline sulfide solid electrolyte is preferably the Li₃PS₄ crystal structure, the thio-LISICON Region II-type crystal structure, or the argyrodite-type crystal structure out of the above-mentioned crystal structures.

Although the shape of the crystalline sulfide solid electrolyte is not particularly limited, the shape may be, for example, a particulate shape. As in the average particle diameter (D₅₀) of the amorphous sulfide solid electrolyte described above, the average particle diameter (D₅₀) of a particulate crystalline sulfide solid electrolyte may fall within the range of, for example, from 0.01 µm to 500 µm, or from 0.1 µm to 200 µm.

### 4. Other Embodiments of Positive Electrode Mixture

A positive electrode mixture according to one embodiment of the present invention includes a sulfur-based active material, a carbon material having pores, at least one of an ion conductor and a modified product of the ion conductor, and a solid electrolyte, and
an overlap rate between a phosphorus element and a carbon element is 28.0% or more in the elemental mapping image analysis of a scanning electron microscope image thereof by energy dispersive X-ray spectroscopy.

A positive electrode mixture according to one embodiment of the present invention includes a sulfur-based active material, a carbon material having pores, at least one of an ion conductor and a modified product of the ion conductor, and a solid electrolyte, and
an overlap rate among a sulfur element, a phosphorus element, and a carbon element is 4.0% or more in the elemental mapping image analysis of a scanning electron microscope image thereof by energy dispersive X-ray spectroscopy.

A positive electrode mixture according to one embodiment of the present invention includes a sulfur-based active material, a carbon material having pores, at least one of an ion conductor and a modified product of the ion conductor, and a solid electrolyte, and has a specific surface area parameter "x" of 5.00 or less.

Any of the positive electrode mixtures of the above-mentioned respective aspects is obtained, for example, by the above-mentioned production method of the present invention.

### Examples

### [Solid Electrolyte]

### Production Example 1 (Production of Solid Electrolyte A)

0.4398 g of lithium sulfide, 0.7084 g of phosphorus pentasulfide, 0.2133 g of lithium iodide, 0.1384 g of lithium bromide, and 10 zirconia-made balls each having a diameter of 10 mm were loaded into a 45 mL zirconia-made pot, and the pot was sealed. The materials were mixed (mechanically milled) with a planetary ball mill device (manufactured by Fritsch, model number: P-7) at a rotation speed of 370 rpm for 40 hours to provide powder. The resultant powder was heated at 195°C for 3 hours to provide a solid electrolyte A.

### Production Example 2 (Production of Solid Electrolyte B)

Lithium sulfide (Li₂S), phosphorus pentasulfide (P₂S₅), lithium bromide (LiBr), and lithium chloride (LiCl) were weighed so that their molar ratio "Li₂S:P₂S₅:LiBr:LiCl" became 47.5:12.5:15.0:25.0, followed by rough mixing under a nitrogen atmosphere.

The raw material mixture was dispersed in a mixed solvent, which had been obtained by adding 2% by mass of dehydrated isobutyronitrile with respect to the raw material mixture to dehydrated toluene, to prepare a slurry having a concentration of about 10% by mass.

A bead mill was operated under the conditions of a peripheral speed of 12 m/s and a flow rate of 500 mL/min, and the slurry was loaded into the mill, followed by a circulation operation for 1 hour. Thus, a mixture was obtained.

After the solvent of the resultant mixture had been removed, the residue was heated at from 400°C to 430°C for 2 hours in an electric furnace. After that, the heated product was slowly cooled to provide a raw material sulfide solid electrolyte.

Under a nitrogen atmosphere, the raw material sulfide solid electrolyte was dispersed in dehydrated toluene, and the dispersion was loaded into the zirconia-made pot of a planetary ball mill device (manufactured by Fritsch: model number: P-7) together with zirconia-made balls each having a diameter of 0.3 mm, followed by the establishment of an inert atmosphere in the pot. The resultant was treated for 2 hours at a number of revolutions of the planetary ball mill of 150 rpm to provide a slurry containing a finely pulverized sulfide solid electrolyte. After the slurry had been transferred to a Schlenk flask purged with nitrogen, the slurry was dried at room temperature for 1 hour with a vacuum pump, and was then heated to from 80°C to 100°C so that a solvent in the finely pulverized sulfide solid electrolyte was further removed (dried under reduced pressure). Thus, a solid electrolyte B was obtained.

### [Positive Electrode Mixture]

### Example 1

### (1) Production of Composite of Activated Carbon and Sulfur (S-C Composite)

Activated carbon (manufactured by Kansai Coke and Chemicals Co., Ltd., MSC-30SSS) and sulfur were loaded into a glass bottle at a weight ratio of 3:7, and were sealed in a SUS tube container. The mixture was heated in an electric furnace at 150°C for 6 hours and at 300°C for 2.75 hours to provide powder of a composite of activated carbon and sulfur.

### (2) Production of Positive Electrode Mixture Precursor

The powder of the composite obtained in the above-mentioned section (1) and phosphorus pentasulfide (manufactured by Italmatch Chemicals S.p.A, melting point: from 286°C to 290°C) were loaded into a Tammann tube having an inner diameter of 12 mm at a weight ratio of 0.7143:0.2857, and were sealed in a SUS tube container. The mixture was heated in an electric furnace at 350°C for 6 hours to provide a positive electrode mixture precursor.

The mass ratio [(S+P₂S₅)/C] is 3.67.

### (3) Production of Positive Electrode Mixture

### (a) First Mixing Step

1.000 g of the positive electrode mixture precursor of the above-mentioned section (2) was loaded into a 45 mL zirconia-made pot together with 10 zirconia-made balls each having a diameter of 10 mm, and the pot was sealed. The materials were mixed and pulverized for 20 hours at room temperature and a rotation speed of 370 rpm with a planetary ball mill (manufactured by Fritsch, model number: P-7).

### (b) Second Mixing Step

0.6300 g of the treated product (first mixture) of the above-mentioned section (a) and 0.2700 g of the solid electrolyte A were loaded into a 45 mL zirconia-made pot together with 34 g of zirconia-made balls each having a diameter of 2 mm, and the pot was sealed. The materials were mixed for 1 hour at room temperature and a rotation speed of 600 rpm with a tumbling mill ("small ball mill stand", manufactured by Asahi Rika Seisakusho, model number: AV-1) to provide positive electrode mixture powder.

### Example 2

Positive electrode mixture powder was obtained in the same manner as in Example 1 except that the solid electrolyte B was used instead of the solid electrolyte A in the second mixing step of the section (3)(b) of Example 1.

### Comparative Example 1

### (a) First Mixing Step

The powder of the C-S composite obtained in the same manner as in the section (1) of Example 1 and phosphorus pentasulfide were loaded into a 45 mL zirconia-made pot together with 10 zirconia-made balls each having a diameter of 10 mm so as to have the same mass ratio as that of the treated product obtained in the section (3)(a) of Example 1, and the pot was sealed. The materials were mixed and pulverized for 20 hours at room temperature and a rotation speed of 370 rpm with a planetary ball mill (manufactured by Fritsch, model number: P-7).

### (b) Second Mixing Step

0.6300 g of the treated product (first mixture) of the above-mentioned section (a) and 0.2700 g of the solid electrolyte A were mixed in the same manner as in the section (3)(b) of Example 1 to provide positive electrode mixture powder.

### Reference Example 1

A positive electrode mixture precursor was obtained in the same manner as in the section (2) of Example 1 except that the powder of the S-C composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a weight ratio of 0.7143:0.2857.

### Reference Example 2

A positive electrode mixture precursor was obtained in the same manner as in the section (2) of Example 1 except that the powder of the S-C composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a weight ratio of 0.8333:0.1667.

### Reference Example 3

The powder of the S-C composite obtained in the above-mentioned section (1) of Example 1 and phosphorus pentasulfide (manufactured by Italmatch Chemicals S.p.A, melting point: from 286°C to 290°C) were loaded into an agate mortar at a weight ratio of 0.7143:0.2857, and were mixed for 5 minutes to provide a positive electrode mixture precursor.

### [Evaluation]

The following evaluations were performed on each of the positive electrode mixtures produced in Examples and Comparative Example.

### (1) X-ray Photoelectron Spectroscopy (XPS) measurement

### (a) XPS Measurement

In a glove box controlled to an Ar atmosphere having a dew point of -60°C or less, a carbon double-sided tape was attached onto a metal substrate, and a powder sample was pressed against the tape with a spatula. A spatula whose surface had been cleaned with an organic solvent such as acetone was used as the spatula. A metal perforated mask (hole diameter: 5 mm) was placed over the tape on which the powder sample had been fixed, and the mask was fixed by screwing to produce a measurement sample. The sample was introduced into an XPS apparatus with a transfer vessel so as not to be exposed to the atmosphere, and was subjected to XPS measurement. Detailed measurement conditions of the XPS are described below.

| | |
|---|---|
| XPS apparatus: | VersaProbe II (manufactured by ULVAC-PHI, Inc.) |
| X-ray source: | Measurement performed with a monochromatized AlKα ray (1,486.6 eV) under a high power condition of 100 W |
| X-ray diameter: | 100 µm (measured by sweeping in a range of 200 µm×1,200 µm) |
| Pass energy: | 23.5 eV (C1s, S2p, P2p) |
| | 46.95 eV (O1s, Li1s, Br3d, I3d5/2, Cl2p) |
| Step energy: | 0.1 eV (C1s, S2p, P2p) |
| | 0.2 eV (O1s, Li1s, Br3d, I3d5/2, Cl2p) |
| Photoelectron detection angle: | 45° |

XPS measurement was performed on the surface (outermost surface) of the sample. The measurement was performed immediately after the introduction of the sample into an ultra-high vacuum (1.0×10⁻⁷ Pa or less).

### (b) Relative Intensity of Sample Surface by P2p Spectrum

MultiPak manufactured by ULVAC-PHI, Inc. was used as analysis software. A charge correction was performed by setting a peak position derived from S₈ in a spectrum derived from an S2p orbital to 164.1 eV. The background of a spectrum derived from a P2p orbital was subtracted by the Shirley method, and cps values (signal intensity: I) were extracted for the following three peaks: a peak having a binding energy around 135.4 eV (peak A), a peak having a binding energy around 134.25 eV (peak B), and a peak having a binding energy around 133.0 eV (peak C). After that, signal intensity ratios (I_{A}/I_{B} and I_{C}/I_{B}) were calculated. The term "around" means that the position of the binding energy may slightly vary depending on a measuring apparatus and the like. For example, the position A means a peak appearing within the range of 135.0 eV or more and 136.5 eV or less, the position B means a peak appearing within the range of 133.5 eV or more and less than 135.0 eV, and the position C means a peak appearing within the range of 132.0 eV or more and less than 133.5 eV. In addition, when a clear peak does not appear at each position, a binding energy of 135.4 eV is set as the position A, a binding energy of 134.25 eV is set as the position B, and a binding energy of 133.0 eV is set as the position C. The P2p relative intensity of the sample surface is a value at one point near the center in a measurement portion (diameter: 5 mm). In the measurement portion, it is recognized that the spectra of each element are almost the same at a total of three points, that is, a point near the center and two points distant from the center by about 500 µm each. The results are shown in Table 1.

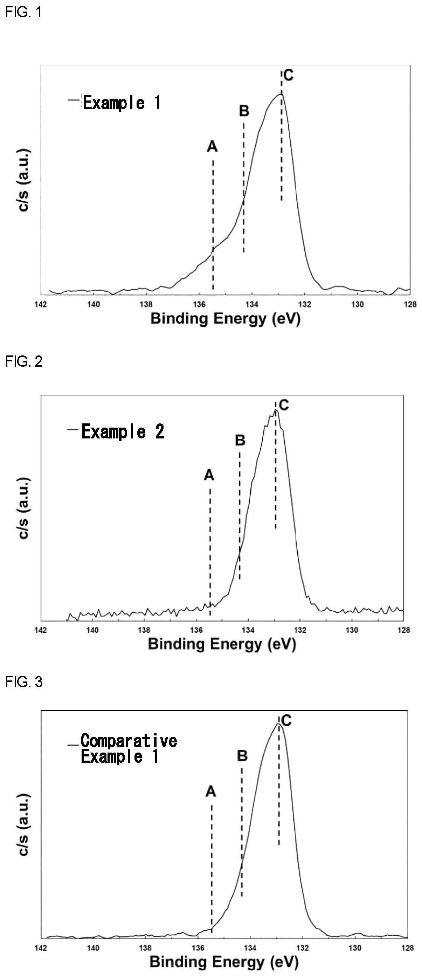

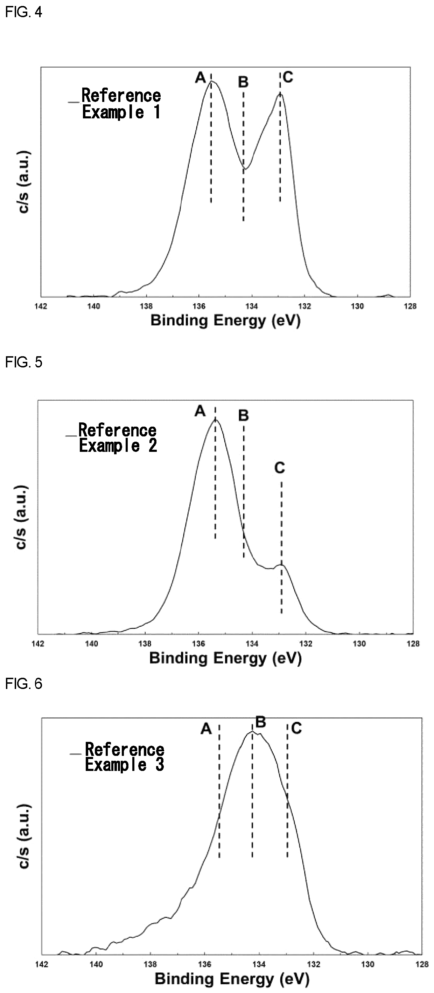

The P2p spectra of Examples 1 and 2, and Comparative Example 1 are shown in FIG. 1 to FIG. 3. The P2p spectra of Reference Examples 1 to 3 are shown in FIG. 4 to FIG. 6. In the figures, the symbol A indicates a position A where the binding energy is around 135.4 eV, the symbol B indicates a position B where the binding energy is around 134.25 eV, and the symbol C indicates a position C where the binding energy is around 133.0 eV.

**Table 1**

| | State of P₂S₅ | Blending ratio (mass) | | | | I_{A}/I_{B} | I_{C}/I_{B} |
|---|---|---|---|---|---|---|---|
| | | Sulfur | Activated carbon | P₂S₅ | Solid electrolyte | | |
| Example 1 | Molten | 35 | 15 | 20 | 30 (A) | 0.48 | 1. 97 |
| Example 2 | Molten | 35 | 15 | 20 | 30 (B) | 0. 23 | 2. 87 |
| Comparative Example 1 | Solid | 35 | 15 | 20 | 30 (A) | 0. 16 | 2. 68 |

| | | | | | | | |
|---|---|---|---|---|---|---|---|
| *The column "State of P₂S₅" indicates a state at the time of the mixing of a S-C composite and P₂S₅. *Regarding the parentheses of a solid electrolyte, (A) indicates the solid electrolyte A, and (B) indicates the solid electrolyte B. | | | | | | | |

As shown in Table 1, in each of Examples, the signal intensity ratio I_{A}/I_{B} is larger than 0.20.

To discuss the analysis results, the P2p spectra of the positive electrode mixture precursors of Reference Examples 1 to 3 are shown in FIG. 4 to FIG. 6. In the analysis, a peak derived from P₂S₅ appears at the position B. In Reference Example 3, the peak B appeared clearly, and the appearance suggested that P₂S₅ existed in an unchanged chemical state. Meanwhile, in each of Reference Examples 1 and 2 in which P₂S₅ was mixed in a molten state with the S-C composite, it was recognized that the peaks A and C appeared instead of the peak B. The peaks A and C each indicate the presence of a modified product of P₂S₅. P₂S₅ mixed in a molten state with the S-C composite may exist in the positive electrode mixture precursor in a chemical state different from the original state. It is inferred that the peak A indicates a component containing an element, such as O or C derived from, for example, activated carbon, in addition to P and S in P₂S₅ because the peak A appears at relatively high binding energies. A carbon material such as activated carbon generally contains C and O. The peak A may indicate a component produced by a reaction between molten P₂S₅ and part of the activated carbon inside, or on the surface of, the activated carbon. It is inferred that the peak C indicates a component like P₂Sx (5<x), which is not P₂S₅ but does not contain O, C, or the like, because the peak C appears at relatively low binding energies and a difference in binding energy from P₂S₅ is small. It is conceivable that in each of Reference Examples 1 and 2, a component produced inside, or on the surface of, the activated carbon appears as the peak C by virtue of an influence of the production of the component of the peak A at the time of the melting of P₂S₅ and a reaction with sulfur also in a molten state.

Comparison between the results of Reference Examples 1 and 2 having different blending amounts of P₂S₅ at the time of its melt mixing revealed that the peak C had a higher signal intensity in Reference Example 1 having a larger amount of P₂S₅, while the peaks A had comparable signal intensities. Accordingly, as a change of the molten P₂S₅, it is conceivable that the production of the component indicated by the peak A by a reaction inside, or on the surface of, the activated carbon preferentially occurs, the remaining portion similarly changes into the component indicated by the peak C inside, or near the surface of, the activated carbon, and both the components cover the S-C composite.

All of the foregoing results may indicate that P₂S₅ mixed in a molten state covered the periphery of the S-C composite to form a strong interface.

As can be seen from Table 1 and FIG. 1 to FIG. 3, when the solid electrolyte was mixed with the positive electrode mixture precursor in which P₂S₅ in a molten state was mixed with the S-C composite, a peak shape changed, and a relationship among the three binding energies (A to C), that is, at least one of the signal intensity ratio I_{A}/I_{B} and the signal intensity ratio I_{C}/I_{B} became high. When a solid electrolyte is added to each of the positive electrode mixture precursors of Reference Examples described above, an influence of P₂Sx (5<x) of each of many sulfide solid electrolytes, that is, the peak C component may appear. From that viewpoint, the influence of the peak C relatively increases in each of both Examples and Comparative Example, but it is understood that their final peak shapes are different. It is understood that in each of Examples in which the precursor that has undergone melting is used, the relative intensity of the peak A is higher than that of Comparative Example that does not include any melting treatment. This is a result of an increase in intensity of the peak C as an influence of the addition of the solid electrolyte to each of Examples, in which the relative intensity of the peak A at a precursor stage is high, as described in Reference Examples. It is conceivable from the foregoing that when the solid electrolyte was mixed with the positive electrode mixture precursor in which P₂S₅ was mixed in a molten state with the S-C composite as in each of Examples, the molten P₂S₅ covered the periphery of the S-C composite to form a strong interface, and hence the signal intensity ratio I_{A}/I_{B} of the positive electrode mixture became a certain value (e.g., 0.2) or more.

### (2) Energy Dispersive X-ray Spectroscopy (SEM-EDS Analysis) of Scanning Electron Microscope Image, and Calculation of Overlap Rate between Carbon and Phosphorus, and Overlap Rate among Carbon, Phosphorus, and Sulfur

### (a) Production of Positive Electrode Mixture Pellet

100 mg of the solid electrolyte A was loaded into a MACOR cylinder having a diameter of 10 mm and press-molded. Each of the resultant positive electrode mixture powders was placed on a pressurized surface so that its amount was 20 mg, followed by press molding again. Subsequently, the positive electrode mixture powder was placed on a pressurized surface on an opposite side so that its amount was 20 mg, followed by press molding once again. A molded body was extracted from the cylinder to provide a positive electrode mixture pellet.

### (b) SEM-EDS Analysis

The positive electrode mixture pellet was broken in a vertical direction, and an exposed surface was subjected to ion milling treatment (manufactured by Hitachi High-Tech Corporation, IM4000) so that a cross section of the positive electrode mixture pellet was exposed. SEM-EDS elemental mapping measurement was performed on the resultant cross section with a SEM (manufactured by Hitachi High-Tech Corporation, SU8220) and an EDS (manufactured by Bruker Corporation, QUANTAX FlatQUAD) to provide a secondary electron image, and 10 visual fields of the EDS images of carbon, phosphorus, and sulfur. The cross section was observed at a magnification of 5,000 times and an acceleration voltage of 10 kV in a scan area of 1,024×768. Regarding EDS mapping, smoothing processing was performed with the software of the above-mentioned EDS device, and the resultant images were used.

At the time of the SEM-EDS elemental mapping measurement, a region processed into the cross section by the ion milling was vertically divided into two equal parts, and the two equally divided regions were each divided horizontally into five equal parts. SEM-EDS elemental mapping was acquired at an observation magnification of 5,000 times at the center of each of 10 divided regions thus obtained.

### (c) Calculation of Overlap Rate between Carbon and Phosphorus, and Overlap Rate among Carbon, Phosphorus, and Sulfur

The images obtained by the above-mentioned procedure were processed with OpenCV (4.5.1) of Python (3). Smoothing processing was performed on each of all 10 visual fields of the EDS images of carbon, phosphorus, and sulfur twice with a bilateral filter of d=15, sigmaColor=64, and sigmaSpace=64. The pixels of each of the resultant images were compressed to 1/3 with MaxPooling2D (pool_size=3, strides=3) of a neural network open library Keras (2.4.3), and the images were smoothed with a median filter of ksize=3. The smoothed images were grayscaled, and were subjected to binarization processing with THRESH_BINARY serving as a standard binarization type at a lowest brightness of 30 and a highest brightness of 255 for carbon, a lowest brightness of 47 and a highest brightness of 255 for phosphorus, and a lowest brightness of 73 and a highest brightness of 255 for sulfur.

Image data was converted by those kinds of processing into a numerical matrix of 0 when an element did not exist or of 255 when the element existed. In the numerical matrices of carbon, phosphorus, and sulfur, an overlap rate for one visual field was calculated by dividing the total number of pixels where the values of 255 overlapped at the same coordinates by the total number of pixels. The average of the overlap rates of all 10 visual fields was set as the overlap rate. The results are shown in Table 2.

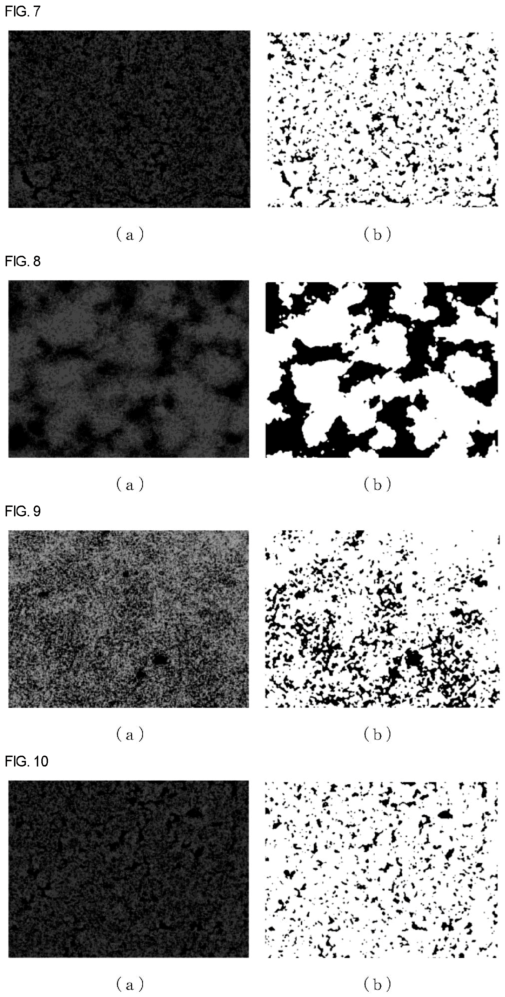

FIG. 7(a) is an EDS mapping of the carbon element (C) of Example 1, and FIG. 7(b) is an image obtained by subjecting FIG. 7(a) to image processing.

FIG. 8(a) is an EDS mapping of the phosphorus element (P) of Example 1, and FIG. 8(b) is an image obtained by subjecting FIG. 8(a) to image processing.

FIG. 9(a) is an EDS mapping of the sulfur element (S) of Example 1, and FIG. 9(b) is an image obtained by subjecting FIG. 9(a) to image processing.

FIG. 10(a) is an EDS mapping of the carbon element (C) of Comparative Example 1, and FIG. 10(b) is an image obtained by subjecting FIG. 10(a) to image processing.

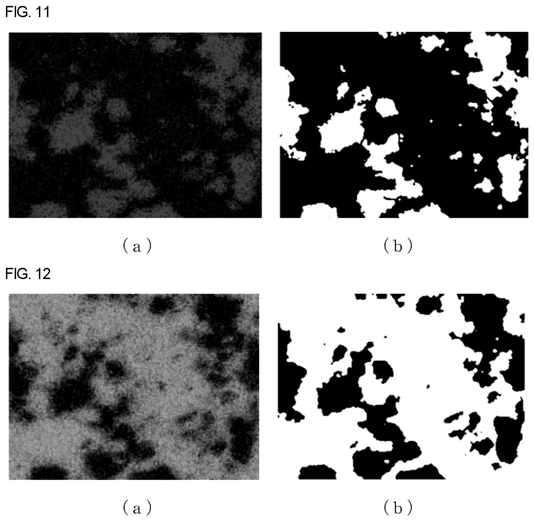

FIG. 11(a) is an EDS mapping of the phosphorus element (P) of Comparative Example 1, and FIG. 11(b) is an image obtained by subjecting FIG. 11(a) to image processing.

FIG. 12(a) is an EDS mapping of the sulfur element (S) of Comparative Example 1, and FIG. 12(b) is an image obtained by subjecting FIG. 12(a) to image processing.

**Table 2**

| | State of P₂S₅ | Blending ratio (mass) | | | | C/P overlap rate | C/P/S overlap rate |
|---|---|---|---|---|---|---|---|
| | | Sulfur | Activated carbon | P₂S₅ | Solid electrolyte | | |
| Example 1 | Molten | 35 | 15 | 20 | 30 (A) | 34. 1 | 11.6 |
| Example 2 | Molten | 35 | 15 | 20 | 30 (B) | 55. 1 | 8.0 |
| Comparative Example 1 | Solid | 35 | 15 | 20 | 30 (A) | 26. 2 | 2. 2 |

The overlap rate between the carbon element (C) and the phosphorus element (P), and the overlap rate among C, P, and the sulfur element (S) were higher in Example 1 probably because both the S-C composite and P₂S₅ came to exist close to each other as a result of melt covering.

### (3) Specific Surface Area Parameter

The BET specific surface areas of the positive electrode mixtures and the solid electrolytes were measured with a specific surface area/pore distribution measuring apparatus (Autosorb-3) manufactured by Quantacrome Instruments. A specific surface area parameter was calculated by the following equation:
specific surface area parameter=(specific surface area of positive electrode mixture)/(specific surface area of solid electrolyte)^{a}
wherein "a" represented the mass ratio (mass of solid electrolyte/mass of entirety of positive electrode mixture) of the solid electrolyte to the entirety of the positive electrode mixture.

The specific surface area parameter enables the correction of the influence of the specific surface area of the solid electrolyte, and the evaluation of a difference due to the presence or absence of the melting treatment of the ion conductor. The results are shown in Table 3.

**Table 3**

| | State of P₂S₅ | Blending ratio (mass) | | | | Specific surface area parameter |
|---|---|---|---|---|---|---|
| | | Sulfur | Activated carbon | P₂S₅ | Solid electrolyte | |
| Example 1 | Molten | 35 | 15 | 20 | 30 | 3.72 |
| Comparative Example 1 | Solid | 35 | 15 | 20 | 30 | 5.10 |

As can be seen from Table 3, the specific surface area parameter of the positive electrode mixture to be obtained was made smaller by mixing P₂S₅ in a molten state with the S-C composite as in Example. This is probably because the molten P₂S₅ and the modified product thereof covered the periphery of the S-C composite to form a strong interface. The specific surface area parameter enables the correction of the influence of the specific surface area of the solid electrolyte, and the evaluation of a difference due to the presence or absence of the melting treatment. This result may suggest that in the positive electrode mixture as well, similarly to the precursor, the S-C composite is covered with the molten P₂S₅ and the modified product thereof.

### [All-solid-state Lithium Ion Battery]

All-solid-state lithium ion batteries were produced as described below by using the positive electrode mixtures produced in Examples and Comparative Example, and were evaluated for their battery characteristics (charge-discharge characteristics).

### ·Production of Negative Electrode Mixture

A negative electrode mixture (also referred to as "lithium titanate (LTO) negative electrode mixture") was obtained by mixing lithium titanate ("LT-1 12" manufactured by Ishihara Sangyo Kaisha, Ltd.), a conductive additive ("Li-100" manufactured by Denka Company Limited, powdery acetylene black), and the solid electrolyte B in a mortar at a mass ratio of 60:5:35 for 5 minutes.

### ·Production of Lithium Ion Battery

100 mg of the solid electrolyte A was placed in a MACOR cylinder having a diameter of 10 mm and subjected to pressure molding to form a solid electrolyte layer (layer of the solid electrolyte A).

Next, each of the positive electrode mixture powders was placed on one pressing surface of the solid electrolyte layer so that its amount became 10 mg, followed by pressure molding again.

Next, the LTO negative electrode mixture was placed on the other pressing surface (pressing surface opposite to the positive electrode) of the solid electrolyte layer so that its amount became 166 mg, followed by pressing. Li foil having a diameter of 9 mm and a thickness of 0.1 mm was placed thereon, and the resultant was pressed again to produce a lithium ion battery.

### ·Charge-discharge Test

A constant-current charge-discharge test was performed on the lithium ion battery using the positive electrode mixture of each of Examples and Comparative Example. The voltage range of the constant-current charge-discharge test was set to from -0.4 V to 1.3 V, and the test was performed while current values were set as shown in Table 4 at a C rate determined on the basis of a theoretical capacity of 1,672 mAh/g for sulfur. Regarding charging, CC-CV charging was performed, in which constant-voltage charging with 0.02 C as a termination condition was performed after constant-current charging, and regarding discharging, constant-current discharging (CC discharging) was performed. The results are shown in Table 5.

**Table 4**

| Number of cycles | Discharging (CC) | Charging (CC-CV) |
|---|---|---|
| 1 | 0.05C | 0. 05C |
| 2 | 0.05C | 0. 05C |
| 3 | 0.05C | 0.1C |
| 4 | 0.1C | 0.1C |
| 5 | 0.2C | 0.1C |
| 6 | 0.33C | 0.1C |
| 7 | 0.5C | 0.1C |
| 8 | 1C | 0.1C |
| 9 | 2C | 0.1C |

**Table 5**

| | Discharge capacity (mAh/g) | | | | | | |
|---|---|---|---|---|---|---|---|
| | @0.05C | @0.1C | @0.2C | @0.33C | @0.5C | @1C | @2C |
| Example 1 | 2007 | 1863 | 1763 | 1534 | 1185 | 531 | 155 |
| Example 2 | 2116 | 1918 | 1767 | 1620 | 1403 | 835 | 312 |
| Comparative Example 1 | 1621 | 1487 | 1344 | 1040 | 703 | 227 | 45 |

It was able to be recognized that the discharge capacities at both of a low rate and a high rate were high in each of Examples as compared to those of Comparative Example. From the foregoing, improving effects on the charge-discharge characteristics in Examples in which the positive electrode mixture precursors were produced through the melting of P₂S₅ (ion conductor) were recognized. It is conceivable that in each of Examples, excellent charge-discharge characteristics were obtained by using the positive electrode mixture precursor having a strong interface and a satisfactory ion conduction path.

### Industrial Applicability

The positive electrode mixture of the present invention is suitable as a constituent material for a lithium ion battery. In addition, the lithium ion battery including the positive electrode mixture of the present invention is suitably used as, for example, a battery to be used in information-related equipment and communication equipment, such as a personal computer, a video camera, and a cellular phone, and a vehicle such as an electric vehicle.

Some embodiments and/or Examples of the present invention have been described in detail in the foregoing, but a person skilled in the art could easily make various modifications to these illustrative embodiments and/or Examples without substantially departing from the novel teachings and effects of the present invention. Accordingly, those various modifications are encompassed in the scope of the present invention.

The literatures described herein and the contents of the application on the basis of which the present application claims Paris convention priority are incorporated herein by reference in their entirety.

The phrase "from "x" to "y"" as used herein represents the numerical range of ""x" or more and "y" or less". Upper limits and lower limits described for numerical ranges may be freely combined.

In addition, among the individual embodiments of the aspects according to the present invention, two or more embodiments that do not contradict each other may be combined, and an embodiment in which two or more embodiments are combined is also an embodiment of the aspects according to the present invention.

## Claims

1. A positive electrode mixture comprising a sulfur-based active material; a carbon material having pores; at least one of an ion conductor containing a phosphorus element and a modified product of the ion conductor; and a solid electrolyte,
wherein in a P2p spectrum in surface elemental analysis thereof by X-ray photoelectron spectroscopy, the following formula (1) is satisfied: ${I}_{A} / {I}_{B} > 0.20$ (1) wherein I_{A} represents a signal intensity at a position A where a binding energy is around 135.4 eV, and I_{B} represents a signal intensity at a position B where the binding energy is around 134.25 eV.

2. The positive electrode mixture according to claim 1, wherein in elemental mapping image analysis of a scanning electron microscope image thereof by energy dispersive X-ray spectroscopy, an overlap rate between a phosphorus element and a carbon element is 28.0% or more.

3. The positive electrode mixture according to claim 1, wherein in elemental mapping image analysis of a scanning electron microscope image thereof by energy dispersive X-ray spectroscopy, an overlap rate among a sulfur element, a phosphorus element, and a carbon element is 4.0% or more.

4. The positive electrode mixture according to any one of claims 1 to 3, wherein the ion conductor has a melting point of from 130°C to 450°C.

5. The positive electrode mixture according to any one of claims 1 to 4, wherein the ion conductor comprises a lithium ion conductive material containing a phosphorus element, and one or more kinds of elements selected from lithium, boron, sulfur, and oxygen, or a precursor thereof.

6. The positive electrode mixture according to any one of claims 1 to 5, wherein the ion conductor comprises phosphorus sulfide.

7. The positive electrode mixture according to any one of claims 1 to 6, wherein the ion conductor comprises phosphorus pentasulfide.

8. The positive electrode mixture according to any one of claims 1 to 7, wherein the sulfur-based active material comprises elemental sulfur.

9. The positive electrode mixture according to any one of claims 1 to 8, wherein a mass ratio of a total of the sulfur-based active material, and the ion conductor containing a phosphorus element and the modified product of the ion conductor is smaller than 5.00 to the carbon material.

10. A method of producing a positive electrode mixture comprising: mixing at least one of a composite or a mixture of a sulfur-based active material and a carbon material having pores with an ion conductor in a molten state to prepare a positive electrode mixture precursor; and
mixing and pulverizing the positive electrode mixture precursor and a solid electrolyte to produce the positive electrode mixture,
wherein the mixing and pulverizing comprises: a first mixing step of mixing and pulverizing the positive electrode mixture precursor to provide a first mixture; and
a second mixing step of adding the solid electrolyte to the first mixture, followed by mixing treatment.

11. The method of producing it according to claim 10, wherein the composite of the sulfur-based active material and the carbon material having pores is mixed with the ion conductor in a molten state.

12. The method of producing it according to claim 10 or 11, wherein the solid electrolyte has crystallinity, and the mixing and pulverizing in the second mixing step is performed under a condition where the crystallinity of the solid electrolyte is free from disappearing.

13. The method of producing it according to any one of claims 10 to 12, wherein the ion conductor has a melting point of from 130°C to 450°C.

14. The method of producing it according to any one of claims 10 to 13, wherein the ion conductor comprises a lithium ion conductive material containing a phosphorus element, and one or more kinds of elements selected from lithium, boron, sulfur, and oxygen, or a precursor thereof.

15. The method of producing it according to any one of claims 10 to 14, wherein the ion conductor is phosphorus pentasulfide.

16. The method of producing it according to any one of claims 10 to 15, wherein the sulfur-based active material comprises elemental sulfur.

17. The method of producing it according to any one of claims 10 to 16, wherein a mass ratio among the sulfur-based active material, the carbon material, and the ion conductor satisfies the following relationship:$\left(sulfur-based active material+carbon material\right) : ion conductor = 50 : 1 to 80 .$

18. The method of producing it according to any one of claims 10 to 17, wherein a mass ratio of a total of the sulfur-based active material and the ion conductor is smaller than 5.00 to the carbon material.

19. A positive electrode comprising the positive electrode mixture according to any one of claims 1 to 9.

20. A lithium ion battery comprising the positive electrode mixture according to any one of claims 1 to 9, or the positive electrode according to claim 19.
